# EUROPÄISCHE PATENTSCHRIFT

(11) **EP 1 163 805 B1**
(45) Veröffentlichungstag und Bekanntmachung des Hinweises auf die Patenterteilung: **01.06.2005**
(21) Anmeldenummer: 00926694.1
(22) Anmeldetag: 31.03.2000
(51) Int. Cl.: H04Q 3/00, H04Q 11/04, H04M 3/51

(54) **VERFAHREN ZUM ÜBERTRAGEN VON DATEN AN MITGLIEDER EINES OPERATORSERVICES**
METHOD OF TRANSMITTING DATA TO MEMBERS OF AN OPERATOR SERVICE
PROCEDE DE TRANSMISSION DE DONNEES A DES MEMBRES D'UN SERVICE D'OPERATEURS

(30) Priorität: 31.03.1999 DE 19914795; 15.04.1999 DE 19917077
(43) Veröffentlichungstag der Anmeldung: 19.12.2001
(73) Patentinhaber: SIEMENS AKTIENGESELLSCHAFT, 80333 München (DE)
(72) Erfinder: ADLI, Wahid, A-1220 Wien (AT)
(86) Internationale Anmeldenummer: PCT/DE2000/000979
(87) Internationale Veröffentlichungsnummer: WO 2000/060880

(56) Entgegenhaltungen:
- US-A- 5 012 512
- US-A- 5 469 504
- CHAN C: "MERIDIAN 1 GLOBAL CORPORATE NETWORKING WITH ISDN" TELESIS,CA,BELL-NORTHERN RESEARCH LTD. OTTAWA, Bd. 18, Nr. 93, 1991, Seiten 27-35, XP000244592 ISSN: 0040-2710
- BOCKER ET AL: "ISDN. Digitale Netze für Sprach-, Text-, Daten-, Video- und Multimediakommunikation" DE,BERLIN, SPRINGER, 1997, Seiten 1-12,83-97,-247, XP002089234 ISBN: 3-540-57431-X in der Anmeldung erwähnt

## Beschreibung

Die Erfindung bezieht sich auf ein Verfahren zur Verwaltung von Operatoren eines Telekommunikationsnetzes, die Mitglieder eines Operatorservice sind, wobei das Netz mehrere Vermittlungsstellen besitzt, und nach Anmelden eines Operators bei seiner Heimatvermittlungsstelle in einem Datenkanal ein Anloggen seitens des Operators über den Datenkanal zu der peripheren Anschlussgruppe (LTG) des Operators erfolgt.

In Telefonnetzwerken werden sogenannte Operatorservices benötigt, welche ein wesentliches Bindeglied zwischen den Kunden des Netzwerkes und den Netzbetreibern darstellen. Die Aufgaben eines solchen Operatorservice sind vielfältig, wobei eine Hauptaufgabe darin liegt, den Teilnehmern auf Anfrage Auskünfte zu erteilen. Beispielsweise kann ein Teilnehmer ein Operatorservice in einem ISDN-Netz anrufen und eine Auskunft erbitten. Der zuständige Operator kann nun, falls notwendig, z. B. auf eine Datenbank zugreifen, wobei ihm sodann eine Information bezüglich eines anderen Teilnehmers auf dem Bildschirm seines PC vorliegt. Nach einem Verbindungswunsch des Operators, der z. B. durch Tastendruck erfolgen kann, wird der Operator mit dem gesuchten Teilnehmer verbunden. Der Operator ist nun sowohl mit dem Ursprungsteilnehmer, als auch mit dem gesuchten Teilnehmer verbunden und kann wahlweise mit einem der Teilnehmer sprechen. Wieder auf weiteren Tastendruck erfolgt eine Signalisierung auf dem D-Kanal, und nun werden die Anschlusslagen beider Teilnehmer der peripheren Anschlussgruppe bekannt geben, und die Verbindung der Sprachkanäle erfolgt über das Koppelnetz, sodass letztlich eine direkte Verbindung zwischen den beiden Teilnehmern vorliegt. Das soeben beschriebene Beispiel soll nur eine der Möglichkeiten bzw. Aufgaben eines Operatorservice darstellen.

Große Netze mit vielen Teilnehmern erfordern entsprechend große Operatorservice-Systeme mit vielen, meist hierarchisch strukturierten Systemteilnehmern (Operatoren), wie beispielsweise bei dem ADMOSS genannten System der Anmelderin. Meldungen der Operatoren zu einer Vermittlungsstelle erfolgen, wie bereits erwähnt, bei einem ISDN-Netz im D-Kanal, und zwar in einer Punkt-zu-Punkt-Konfigüration bei daueraktiver Schicht 2 des OSI Schichtenmodells. Die Meldungen erfolgen in einem ISDN-Netz durch das D-Kanal Protokoll gestützt, wozu auch auf das Blue Book, Volume VI - Fascicle VI. 11, "Digital Subscribe Signalling System No. 1 (DSS1), Network Layer, User-Network Management", Recommendations Q. 930 - Q. 940, insbesondere auf Recommendation Q. 931 verwiesen wird.

Die Operatoren sind üblicherweise in sogenannten Call Centers stationiert, und ihre jeweilige aus Endgerät, PC, Bildschirm etc. bestehende, üblicherweise und im folgenden "Konsole" genannte Einrichtung ist direkt an das System angeschlossen bzw. mit der lokalen Vermittlungsstelle verbindbar. Immer häufiger besteht jedoch das Bedürfnis, dezentralisierte Operatoren, beispielsweise im Rahmen von Heimarbeit, einzusetzen, doch sollte ein einziges zentrales Verwaltungssystem für die Operatoren in dem Netz möglich sein.

Aufgaben und Probleme von Operatoren sind bei einem Verfahren der eingangs genannten Art auch in der US-A-5,012,512 beschrieben, wobei zur Verkürzung des Zeitaufwandes in diesem Dokument eine Lösung beschrieben wird, bei welcher auf einem Bildschirm des Operators neben den Anforderungsdaten eines Teilnehmers auch Daten dargestellt und bearbeitet werden können, welche der Operator nach Anforderung von ein oder mehreren Datenbanken erhalten hat.

Die US-A-5,469,504 beschreibt ein Anruf-Verteilersystem mit einem Hostrechner samt Datenbank, welcher an alle Vermittlungsstellen physikalisch angeschlossen ist, und als Vermittler bzw. Übermittler der Daten zwischen den einzelnen Vermittlungsstellen dient, an welche Operatoren eines Operatorservice angeschlossen sind. Bei diesem System wird zunächst eine Gesprächsverbindung zu einem Operator über die lokale Vermittlungsstelle angeboten und, falls der Operator sich für dieses Gespräch nicht geeignet befindet, wird unter Zuhilfenahme des Hostrechners dieses Gespräch zu einem weiteren Operator transferiert, wobei dieser Transfer mit Hilfe eines speziellen Protokolls, in dem Dokument "Intertandem-Protokoll" genannt, erfolgt. Dieses Protokoll verwendet ein DTMF-Verfahren. Der anfallende Aufwand durch Einsatz eines Hostrechners in Verbindung mit dem in dem Dokument beschriebenen X.25-Schnittstellenprotokoll sowie dem Intertandem-Protokoll, ist allerdings als nachteilig anzusehen.

Eine Aufgabe der Erfindung liegt dementsprechend darin, eine netzweite Verwaltung sämtlicher Operatoren bzw. Konsolen des Operatorsystems zu ermöglichen. Beispielsweise sollte eine zentrale Vermittlungsstelle - Masteramt genannt - die Information besitzen, welche Operatoren frei oder belegt bzw. außer Betrieb sind, sodass beispielsweise eine Anfrage eines Netzteilnehmers betreffend einer Telefonnummer, Adresse etc. rasch an einen Operator einer fernen Vermittlungsstelle weitergeleitet werden kann, falls kein Operator der lokalen Vermittlungsstelle zur Verfügung steht. Es sollte somit eine netzweite Anrufverteilung betreffen die Operatoren möglich sein.

Diese Aufgabe wird mit einem Verfahren der eingangs genannten Art gelöst, bei welchem erfindungsgemäß nach erfolgreichem Anloggen eine Anforderung für Fernanloggen in einem zentralen Masteramt gesandt wird, eine Rufnummer bzw. Rufnummerntabelle virtueller, in dem Masteramt angesiedelter Operator von der peripheren Anschlussgruppe zu dem Operator gesandt wird, der Operator unter Zuhilfenahme der Rufnummer oder Rufnummerntabelle eine Gesprächsverbindung zu einem virtuellen Operator initiiert, und nach erfolgreichem Aufbau der Gesprächsverbindung über eine Zwischenamtsignalisierung die Anforderung für Fernanloggen von der Heimatvermittlungsstelle an das Masteramt gesendet und in diesem seinem Koordinationsprozessor zugeleitet wird, daraufhin Log-On-Bestätigungsdaten und für das Operatorservice spezifische Daten aus dem Koordinationsprozessor und/oder einer peripheren Anschlussgruppe des Masteramtes in die periphere Anschlussgruppe des Operators in der Heimatvermittlungsstelle und von dort in die Endstelle des Operators geladen werden, und eine Statusmeldung des Operators über einen Datenkanal zu der peripheren Anschlussgruppe der Heimatvermittlung und von hier über eine Zwischenamtsignalisierung zu dem Koordinationsprozessor des Masteramtes gesandt wird.

Dank der Erfindung kann ein netzweit arbeitendes und zentral verwaltetes Operatorsystem geschaffen werden.

Es kann zweckmäßig, da Ressourcen sparend sein, wenn nach dem Fernanloggen des Operators an das Masteramt das lokale Anloggen an die Heimatvermittlungsstelle aufgelöst wird.

Zur Erleichterung der Operatorarbeit kann vorgesehen sein, dass die Statusmeldung erst nach Ablauf einer auf das erfolgreiche Fernanloggen folgenden Schutzzeit abgesandt wird.

Es ist zweckmäßig, wenn zu übertragende Daten von der peripheren Anschlussgruppe des Masteramtes über einen von dem Gesprächskanal verschiedenen Datenkanal an den Operator gesandt werden, wobei dies die übliche und voraussetzungsgemäß in dem Netz auch vorhandene Möglichkeit zur Datenübertragung darstellt.

Da aber andererseits gemäß der Erfindung eine Gesprächsverbindung aufgebaut wird, kann es auch sinnvoll sein, wenn zu übertragende Daten mit Hilfe eines Data-Link-Programmes über einen zwischen dem Operator und einem virtuellen Operator aufgebauten Gesprächskanal übertragen werden.

Die Erfindung eignet sich besonders zur Anwendung in einem ISDN-Netz, wobei der Datenkanal der D-Kanal und die Gesprächskanäle B-Kanäle sind. Dabei wird dann die Zwischenamtssignalisierung mit Vorteil eine ISUP-Signalisierung sein.

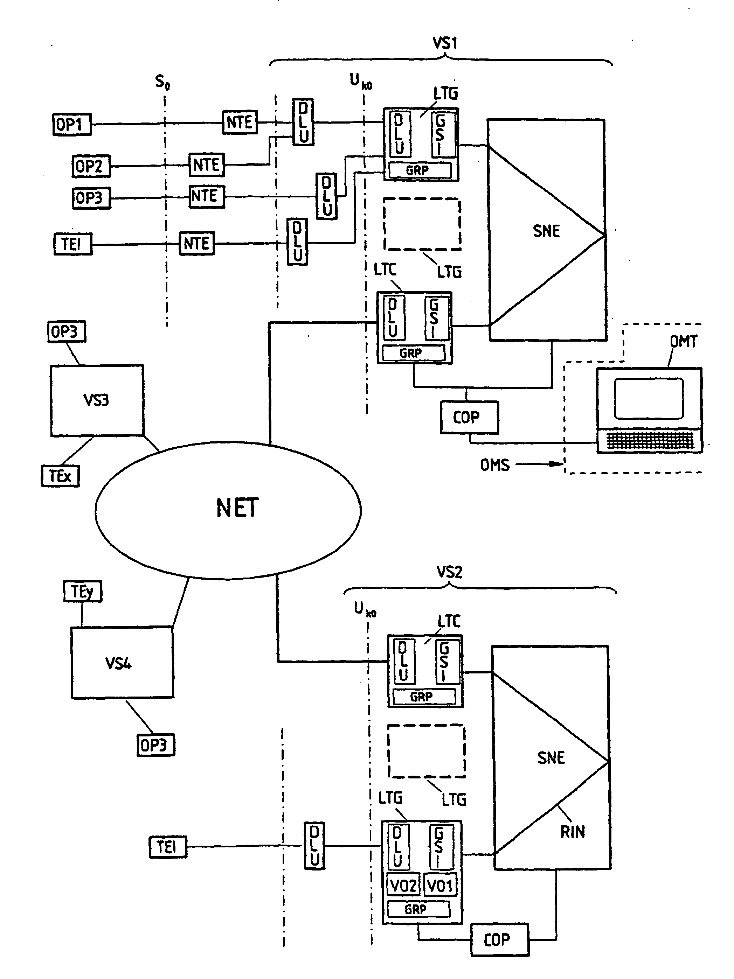

Die Erfindung samt weiterer Vorteile ist im folgenden anhand einer beispielsweisen Ausführungsform unter Zuhilfenahme der Zeichnung näher erläutert. Diese zeigt in ihrer einzigen Figur den prinzipiellen Aufbau eines Netzes mit zwei dargestellten Vermittlungsstellen und einen Operatorservice.

In der Figur erkennt man links oben einige Teilnehmer OP1, OP2, ... eines Operatorservice, wobei hier nicht auf die Hierarchie innerhalb der Operatoren OP1, OP2, - eingegangen wird. Alle Operatoren OP1, OP2, ... sind neben üblichen Netzteilnehmern TEI eines Telekommunikationsnetzes NET, im vorliegenden Fall eines ISDN-Netzes, und daher über eine S₀-Schnittstelle in das Netz eingebunden, d. h. hier je an einem Netzwerkanschluss NTE angeschlossen.

Eine erste Vermittlungsstelle VS1 des Netzes ist rechts oben gezeigt, und sie besitzt in bekannter Weise ein Koppelnetz SNE und daran angeschlossene periphere Anschlussgruppen LTG, LTC. Zur Steuerung der Vermittlungsstelle VS1, vor allem des Koppelnetzes SNE, ist ein Koordinationsprozessor COP vorgesehen. Gleichfalls in bekannter Weise enthält jede periphere Anschlussgruppe LTG, LTC einen Gruppenprozessor GRP, und an jede periphere Anschlussgruppe sind bei diesem Ausführungsbeispiel über eine Uₖ₀-Schnittstelle Konzentratoren DLU (Digital Line Unit) angeschlossen. Auch jeder dieser Konzentratoren DLU besitzt mehrere Eingänge für die bereits vorhin genannten Netzwerkanschlüsse. Bei größeren Vermittlungsstellen können an ein Koppelnetz SNE bis zu 512 periphere Anschlussgruppen LTG (Line Trunk Group), LTC angeschlossen sein, und an jede Anschlussgruppe LTG sind üblicherweise zwei Konzentratoren DLU angeschlossen. In bekannter Weise enthalten die peripheren Anschlussgruppen LTG, LTC auch einen sogenannten Group Switch GSI.

In einer peripheren Anschlussgruppe LTG, LTC laufen verschiedene Programme ab, die von dem Gruppenprozessor GRP unterstützt werden, z. B. erfolgt hier der größte Teil des Verbindungsaufbaues, die Signalisierung, der Codeempfang, etc. Im allgemeinen werden 70 % des Verbindungsaufbaues in den peripheren Anschlussgruppen durchgeführt, wogegen dem Koordinationsprozessor COP vor allem Routingaufgaben zukommen.

Zu der Vermittlungsstelle gehört weiters ein "Operation and Maintenance System" OMS mit einem "Operation and Maintenance Terminal" OMT, an dem Überwachungspersonal den Zustand der Vermittlungsstelle ständig beobachten und Fehler erkennen kann.

Die Operatoren OP1, OP2, ... des Operatorservices besitzen üblicherweise Arbeitsplätze mit Personalcomputern, die ISDN-Karten und spezielle Software sowie Sprechgarnituren für die Operatoren enthalten. Die Endstellen der Operatoren werden im folgenden auch "Konsolen" genannt. Seitens der Operatoren OP1, OP2, ... können Nachrichten an die Vermittlungsstelle, vor allem an die peripheren Anschlussgruppen LTG gesandt werden, wobei diese Nachrichten im Gruppenprozessor GRP verarbeitet werden und zu entsprechenden weiteren Maßnahmen, z. B. einem Verbindungsaufbau führen. Die Meldungen werden in einer Punkt-zu-Punkt-Konfiguration bei daueraktiver Schicht 2 und in einem ISDN-Netz im D-Kanal gesendet.

In der Zeichnung rechts unten ist eine weitere dem Netz NET angehörige Vermittlungsstelle VS2 eingezeichnet, deren Aufbau prinzipiell der ersten Vermittlungsstelle VS1 entspricht, doch dient die zweite Vermittlungsstelle VS2 als Masteramt des Operatorservice. Natürlich können in Abhängigkeit von der Größe des Netzes noch viele andere Vermittlungsstellen vorhanden sein, wie hier nur durch zwei Kästchen VS3, VS4 angedeutet. Jede dieser Vermittlungsstellen können wieder Operatoren OPₓ, OP_{y} zugeordnet sein.

Jede Vermittlungsstelle VS1, VS2, ... besitzt eine besondere periphere Anschlussgruppe LTC für rasche Datenverbindungen, die im Rahmen der Zwischenamtsignalisierung z. B. der ISUP-Signalisierung (siehe z. B. P. Bocker, ISDN - Digitale Netze für Sprach-, Text-, Daten-, Video- und Multimediakommunikation, 4. Auflage, Springer, Abschnitt 6. 2. 9, "Zwischenamtsignalisierung) den Datenaustausch mit anderen ebensolchen Anschlussgruppen über rasche Datenverbindungen z. B. Lichtfaserleitungen ermöglicht.

Für die Erfindung ist es wesentlich, dass ein Anmelden, im folgenden auch "Anloggen" genannt, jedes Operators OP1, OP2, ... bei einem fernen Amt, hier dem Masteramt VS2, möglich ist. Die Erfindung sieht nun ein im folgenden näher beschriebenes Verfahren vor.

Ein Operator OP1 meldet sich zunächst - dem Stand der Technik entsprechend - unter Benutzung eines Passwortes und einer ID-Nummer bei seiner Heimatvermittlungsstelle VS1 an. Nach erfolgreichem Anloggen wird seitens der Konsole des Operators OP1 über eine Datenverbindung im D-Kanal eine Anforderung für Fernanloggen im Masteramt VS2 zu der zugehörigen peripheren Anschlussgruppe LTG der Heimatvermittlungsstelle VS1 gesandt. Diese Anforderung führt nun dazu, dass eine Rufnummer oder eine Rufnummerntabelle virtueller Operatoren VO1, VO2 an die Konsole des Operators OP1 gesandt wird.

Derartige virtuelle Operatoren sind in zumindest einer peripheren Anschlussgruppe LTG des Masteramtes VS2 eingerichtet, und werden benötigt um eine tatsächliche Gesprächsverbindung aufbauen zu können.

Die Konsole des Operators OP1 verwendet sodann die Rufnummer oder eine der möglichen Rufnummern um eine Gesprächsverbindung, d. h. eine Verbindung in einem B-Kanal zu einem virtuellen Operator VO1 aufzubauen. Nach erfolgreichem Aufbau dieser Verbindung wird die Anforderung für Fernanloggen über die Zwischenamtsignalisierung von der Vermittlungsstelle des Operators OP1 zu dem Masteramt VS2 gesandt und in diesem dem Koordinationsprozessor COP zugeleitet. Im nächsten Schritt werden sogenannte "Log-On-Response"-Daten und Rufnummerndaten, beispielsweise System-Uhrzeit und -Datum, die Hierarchiestruktur, persönliche Daten und unterschiedliche Berechtigungen, wie etwa Zugriffsmöglichkeiten auf statistische Daten, etc. aus dem Koordinationsprozessor COP und/oder einer peripheren Anschlussgruppe LTG des Masteramtes VS2 in die periphere Anschlussgruppe LTG des Operators OP1 - in der Heimatvermittlungsstelle VS1- bzw. von hier in die Operatorkonsole geladen. Dies kann über einen Datenkanal (D-Kanal) oder über die bestehende Gesprächsverbindung in einem B-Kanal mit Hilfe eines Data Link-Programmes erfolgen. Nach Beendigung dieser Datenübertragung wird bezüglich des "lokalen" Log-On zwischen Operator OP1 und Heimatvermittlung VS1 das "Log-Off" eingeleitet.

Falls jedoch die Gesprächsverbindung im B-Kanal zwischen Operatorkonsole und virtuellem Operator VOP nicht zustande gekommen ist, wird der erwähnten Rufnummerntabelle seitens der Konsole die nächste Rufnummer eines virtuellen Operators entnommen und ein neuer Verbindungsversuch gestartet.

Nach erfolgreichem Log-On in dem Masteramt VS2 erfolgt, zweckmäßigerweise nach Ablauf einer nach Ablauf einer gewissen Schutzzeit, die durch einen Post-Call-Timer realisiert wird, eine Statusmeldung (Operator Status Message), in diesem Fall "idle", von der Konsole des Operators OP1 über eine D-Kanal-Verbindung zu der peripheren Anschlussgruppe LTG der Heimatvermittlung VS1. Von hier wird nun mit Hilfe der Zwischenamtsignalisierung, z. B. wie erwähnt ISUP, die Statusmeldung (hier "idle") zu dem Masteramt VS2 übertragen und hier zu dem Koordinationsprozessor COP gesandt. Die erwähnte Schutzzeit von beispielsweise 20 bis 60 s lässt den Anschluss des Operators OP1 noch belegt bzw. besetzt erscheinen und soll verhindern, dass der Operator OP1 praktisch zeitgleich mit seinem Log-On durch eine Anfrage "Überfüllen" wird.

Statusänderungen des Operators OP1, z. B. von "idle" auf "busy" werden in gleicher Weise behandelt und sind daher im Masteramt VS2 bekannt.

Die Erfindung ermöglicht in der oben beschriebenen Weise ein netzweites Operatorservice-System, bei dem wegen der bei einem Amt (Vermittlungsstelle) erfolgenden zentralen Verwaltung des Systems beispielsweise Operatoren ferner Ämter in die Arbeit des Systems eingebunden werden können.

## Patentansprüche

1. Verfahren zur Verwaltung von Operatoren eines Telekommunikationsnetzes (NET), die Mitglieder eines Operatorservice sind, wobei das Netz mehrere Vermittlungsstellen (VS1, VS2) besitzt, und nach Anmelden eines Operators (OP1) bei seiner Heimatvermittlungsstelle (VS1) in einem Datenkanal ein Anmelden seitens des Operators (OP1) über den Datenkanal zu einer peripheren Anschlussgruppe (LTG) des Operators erfolgt,
**dadurch gekennzeichnet,**
**dass** nach dem erfolgreichem Anmelden eine Anforderung für ein Fernanloggen des Operators (OP1) in einem zentralen Masteramt (VS2) gesendet wird,
**dass** dann eine Rufnummer bzw. Rufnummerntabelle virtueller, in dem Masteramt (VS2) angesiedelter Operatoren (VO1, VO2) von der peripheren Anschlussgruppe (LTG) zu dem Operator (OP1) gesendet wird,
**dass** der Operator (OP1) unter Zuhilfenahme der Rufnummer oder Rufnummerntabelle eine Gesprächsverbindung zu einem virtuellen Operator (VO1) initiiert,
und nach erfolgreichem Aufbau der Gesprächsverbindung über eine Zwischenamtsignalisierung die Anforderung für Fernanloggen von der Heimatvermittlungsstelle (VS1) an das zentrale Masteramt (VS2) gesendet und in diesem einem Koordinationsprozessor (COP) zugeleitet wird,
daraufhin Log-On-Bestätigungsdaten und für den Operatorservice spezifische Daten aus dem Koordinationsprozessor (COP) und/oder einer peripheren Anschlussgruppe (LTG) des zentralen Masteramtes (VS2) in die periphere Anschlussgruppe (LTG) des Operators (OP1) in der Heimatvermittlungsstelle (VS1) und von dort in eine Konsole des Operators geladen werden,
und eine Statusmeldung des Operators (OP1) über den Datenkanal zu der peripheren Anschlussgruppe (LTG) der Heimatvermittlungsstelle und von hier über eine Zwischenamtsignalisierung zu dem Koordinationsprozessor (COP) des zentralen Masteramtes (VS2) gesendet wird.

2. Verfahren nach Anspruch 1,
**dadurch gekennzeichnet, dass** nach dem Fernanloggen des Operators (OP1) an das zentrale Masteramt (VS2) das lokale Anmelden an die Heimatvermittlungsstelle (VS1) aufgelöst wird.

3. Verfahren nach Anspruch 1 oder 2,
**dadurch gekennzeichnet, dass** die Statusmeldung erst nach Ablauf einer auf das erfolgreiche Fernanloggen folgenden Schutzzeit abgesendet wird.

4. Verfahren nach einem der Ansprüche 1 bis 3,
**dadurch gekennzeichnet, dass** zu übertragende Daten von einer peripheren Anschlussgruppe (LTG) des zentralen Masteramtes (VS2) über einen von der Gesprächsverbindung verschiedenen Datenkanal an den Operator (OP1) gesendet werden.

5. Verfahren nach einem der Ansprüche 1 bis 3,
**dadurch gekennzeichnet, dass** zu übertragende Daten mit Hilfe eines Data-Link-Programmes über die zwischen dem Operator (OP1) und einem virtuellen Operator (VO1, VO2) aufgebaute Gesprächsverbindung übertragen werden.

6. Verfahren nach einem der Ansprüche 1 bis 5,
bei welchem das Kommunikationsnetz (NET) ein ISDN-Netz ist, der Datenkanal der D-Kanal und die Gesprächsverbindungen B-Kanäle sind.

7. Verfahren nach Anspruch 6,
**dadurch gekennzeichnet, dass** die Zwischenamtsignalisierung eine ISUP-Signalisierung ist.

## Revendications

1. Procédé de gestion d'opérateurs d'un réseau (NET) de télécommunication, qui sont membres d'un service d'opérateurs, le réseau ayant plusieurs centres (VS1, VS2) de commutation et après demande d'un opérateur (OP1) à son centre (VS1) de commutation pour les services de rattachement dans un canal de données une demande d'entrée en communication de la part de l'opérateur (OP1) s'effectuant par le canal de données vers un groupe de raccordement (LTG) périphérique de l'opérateur, **caractérisé**
**en ce qu'**après que la demande d'entrée en communication à été couronnée de succès, une demande pour une entrée en communication à distance de l'opérateur (OP1) est émise dans un bureau (VS2) maître central,
**en ce qu'**ensuite un numéro d'appel ou une table de numéros d'appel d'opérateur (V01, V02) virtuel, établi dans le bureau (VS2) maître est envoyé du groupe (LTG) de raccordement périphérique à l'opérateur (OP1),
**en ce que** l'opérateur (OP1) fait débuter en s'aidant du numéro d'appel ou de la table de numéros d'appel une liaison de conversation vers un opérateur (VO1) virtuel,
et après que la liaison de conversation a été établie avec succès par une signalisation de bureau intermédiaire, la demande d'une communication à distance est envoyée du centre (VS1) de commutation pour les services de rattachement au bureau (VS2) maître central et est acheminée dans celui-ci à un processeur (COP) de coordination,
puis des données de confirmation d'établissement de communication et des données spécifiques au service d'opérateurs sont chargées du processeur (COP) de coordination et/ou d'un groupe (LTG) de raccordement périphérique du bureau (VS2) maître central dans le groupe (LTG) de raccordement périphérique de l'opérateur (OP1) dans le centre (VS1) de commutation pour les services de rattachement et de la dans une console de l'opérateur,
et une indication de statut de l'opérateur (OP1) est envoyée par le canal de données au groupe (LTG) de raccordement périphérique du centre de commutation pour les services de rattachement et de là par une signalisation de bureau intermédiaire au processeur (COP) de coordination du bureau (VS2) maître central.

2. Procédé suivant la revendication 1,
**caractérisé en ce qu'**après la demande de télécommunication à distance de l'opérateur (OP1) au bureau (VS2) maître central, il est mis fin à la demande de communication locale au centre (VS1) de commutation pour les services de rattachement.

3. Procédé suivant la revendication 1 ou 2,
**caractérisé en ce que** l'indication d'état n'est émise qu'après expiration d'un temps de protection suivant la demande, de mise en communication à distance couronnée de succès.

4. Procédé suivant l'une des revendications 1 à 3,
**caractérisé en ce que** des données à transmettre d'un groupe (LTG) de raccordement périphérique du bureau (VS2) maître central par un canal de données différent de la liaison de conversation sont envoyées à l'opérateur (OP1).

5. Procédé suivant l'une des revendications 1 à 3,
**caractérisé en ce que** les données à transmettre à l'aide d'un programme Data-Link sont transmises par la liaison de conversation établie entre l'opérateur (OP1) et un opérateur (VO1, VO2) virtuel.

6. Procédé suivant l'une des revendications 1 à 5,
dans lequel le réseau (NET) de communication est un réseau RNIS, le canal de données est le canal D, et les liaisons de conversation sont des canaux B.

7. Procédé suivant la revendication 6,
**Caractérisé en ce que** la signalisation de bureaux intermédiaires est une signalisation sous-système utilisateur RNIS.

## Claims

1. Method for administering operators of a telecommunication network (NET) who are members of an operator service, wherein the network possesses several exchanges (VS1, VS2), and after a log-on of an operator (OP1) to his home exchange (VS1) in a data channel, a log-on is performed by the operator (OP1) via the data channel to a peripheral line trunk group (LTG) of the operator,
**characterised in that**,
after the log-on is complete, a request is transmitted for a remote logging on of the operator (OP1) in a central master exchange (VS2)
a directory number or directory number table of virtual operators (VO1, V02) located in the master exchange (VS2) is then transmitted from the peripheral line trunk group (LTG) to the operator (OP1),
the operator (OP1) initiates with the aid of the directory number or directory number table a voice connection to a virtual operator (VO1),
and after successful establishment of the voice connection via inter-exchange signalling the request for logging on remotely is transmitted from the home exchange (VS1) to the central master exchange (VS2) and forwarded in this master exchange to a coordination processor (COP),
log-on confirmation data and specific data for the operator service is then loaded from the coordination processor (COP) and/or a peripheral line trunk group (LTG) of the central master exchange (VS2) to the peripheral line trunk group (LTG) of the operator (OP1) in the home exchange (VS1) and from there into a console of the operator,
and a status message of the operator (OP1) is transmitted via the data channel to the peripheral line trunk group (LTG) of the home exchange and from here via interexchange signalling to the coordination processor (COP) of the central master exchange (VS2).

2. Method according to Claim 1,
**characterised in that**,
after the remote log-on of the operator (OP1) to the central master exchange (VS2), the local log-on to the home exchange (VS1) is released.

3. Method according to Claim 1 or Claim 2,
**characterised in that**,
the status message is not sent until after expiration of a blocking period following the successful remote log-on.

4. Method according to any one of Claims 1 to 3,
**characterised in that**,
data to be transmitted is sent from a peripheral line trunk group (LTG) of the central master exchange (VS2) via a different data channel from the voice connection to the operator (OP1).

5. Method according to any one of Claims 1 to 3,
**characterised in that**,
data to be transmitted is transmitted with the aid of a data link program via the voice connection established between the operator (OP1) and a virtual operator (VO1, V02).

6. Method according to any one of Claims 1 to 5,
in which the communication network (NET) is an ISDN network, the data channel is the D channel and the voice connections are B channels.

7. Method according to Claim 6,
**characterised in that**,
the interexchange signalling is ISUP signalling.
